Europäisches Patentamt

European Patent Office

Office européen des brevets

(19)

(11) **EP 1 086 035 B1**

(12) # FASCICULE DE BREVET EUROPEEN

(45) Date de publication et mention
de la délivrance du brevet:
**25.09.2002 Bulletin 2002/39**

(21) Numéro de dépôt: **99950340.2**

(22) Date de dépôt: **06.05.1999**

(51) Int Cl.$^7$: **B65G 53/16**, B65G 53/20,
C25C 3/14

(86) Numéro de dépôt international:
**PCT/FR99/01075**

(87) Numéro de publication internationale:
**WO 99/058435 (18.11.1999 Gazette 1999/46)**

(54) **PROCEDE POUR LE CONVOYAGE EN LIT HYPERDENSE DE MATERIAUX PULVERULENTS ET DISPOSITIF A FLUIDISATION POTENTIELLE DESTINE A LE METTRE EN OEUVRE**

VERFAHREN ZUM FÖRDERN PULVERFÖRMIGEN MATERIALS IN HOCH-DICHTEN FLIESSBETT, SOWIE VORRICHTUNG ZUR DURCHFÜHRUNG DES VERFAHRENS MIT POTENTIELLER FLUIDISIERUNG

METHOD FOR CONVEYING ON HIGH-DENSITY BED POWDER MATERIALS AND DEVICE WITH POTENTIAL FLUIDISATION FOR IMPLEMENTING SAME

(84) Etats contractants désignés:
**CH DE ES FR GB GR IE IT LI NL SE**

(30) Priorité: **11.05.1998 FR 9806124**

(43) Date de publication de la demande:
**28.03.2001 Bulletin 2001/13**

(73) Titulaire: **ALUMINIUM PECHINEY**
**75218 Paris Cedex 16 (FR)**

(72) Inventeurs:
• **GASQUET, Gérard**
**F-13170 Les Pennes Mirabeau (FR)**

• **CLOUE, Christian**
**Quartier Bompertuis F-13120 Gardanne (FR)**

(74) Mandataire: **Marsolais, Richard**
**Péchiney,**
**Immeuble "SIS"**
**217, cours Lafayette**
**69451 Lyon Cedex 06 (FR)**

(56) Documents cités:
**EP-A- 0 026 735          WO-A-85/04676**
**DE-A- 3 024 567          US-A- 3 056 632**
**US-A- 4 016 053**

# Description

## DOMAINE TECHNIQUE

L'invention concerne le convoyage de matériaux pulvérulents fluidisables. Il s'agit d'un convoyage horizontal ou incliné permettant de transporter lesdits matériaux entre une zone de stockage et au moins une zone à alimenter, lesdites zones étant éloignées l'une de l'autre.

Il s'agit d'un procédé continu de transport de produit pulvérulent permettant d'alimenter, à partir d'une unique zone de stockage, un grand nombre d'ensembles de conditionnement tels que des ensacheuses, des dispositifs de mise en conteneur, ou encore un grand nombre d'ensembles de production tels que des presses extrudeuses de matière plastique ou des cellules de cuves d'électrolyse ignée.

Les matériaux pulvérulents à transporter sont fluidisables: ils ont une granulométrie et une cohésion telles qu'en leur insufflant un gaz à faible vitesse, on provoque une décohésion des particules entre elles et une réduction des forces de frottement interne. De tels matériaux sont, par exemple, l'alumine destinée à l'électrolyse ignée, les ciments, plâtres, la chaux vive ou éteinte, les cendres volantes, le fluorure de calcium, le chlorure de magnésium, toutes charges pour mélanges, les catalyseurs, les poussières de charbon, le sulfate de sodium, les phosphates, polyphosphates ou pyrophosphates, les matériaux plastiques sous forme de poudre, les produits alimentaires tels que le lait en poudre, les farines, etc...

## ETAT DE LA TECHNIQUE

De nombreux dispositifs ont été étudiés et développés pour le transport en lit fluidisé de matériaux pulvérulents. Un problème particulier est lié à l'alimentation en continu du matériau pulvérulent, régulée en fonction des besoins de consommation dudit matériau. Un exemple parmi d'autres illustrant ce problème est relatif à l'alimentation en alumine des cellules d'électrolyse ignée pour la production de l'aluminium.

Pour ce faire, l'alumine, produit pulvérulent transporté et solubilisé dans le bain électrolytique, est progressivement consommée pendant que se déroule l'électrolyse et doit être remplacée au fur et à mesure de sa consommation, de telle manière que la concentration en alumine solubilisée soit maintenue à un niveau optimal, favorable au rendement maximal de la cellule d'électrolyse. Dès lors, il devient nécessaire de régler la quantité d'alumine introduite dans la cuve d'électrolyse, de telle manière que son fonctionnement ne soit pas perturbé par un excès ou par un manque d'alumine.

Le dispositif de transport de matériaux pulvérulents mis au point par la demanderesse et décrit dans le brevet européen EP-B- 0 179 055 permet une alimentation en continu de matières solides pulvérulentes en phase hyperdense. Il sert notamment à alimenter en alumine, de façon régulière et continue, les trémies de stockage et de distribution situées dans la superstructure des cuves d'électrolyse. Le préambule de la revendication 1 est basé sur cet état de la technique.

C'est un dispositif à fluidisation potentielle, destiné au convoyage de matériaux pulvérulents en lit hyperdense, permettant de transporter ces matériaux depuis une zone de stockage jusqu'à au moins une zone à alimenter. Comme en fluidisation classique, ce dispositif comprend, entre la zone de stockage et la zone à alimenter, au moins un convoyeur horizontal, appelé aérocanalisation, constitué par un canal inférieur destiné à la circulation d'un gaz, un canal supérieur destiné à la circulation du matériau pulvérulent, les deux canaux étant séparés par une paroi poreuse. Le canal inférieur est alimenté en gaz par au moins une tubulure d'alimentation. Contrairement à ce qui se fait en fluidisation classique, le matériau pulvérulent remplit complètement le canal supérieur du convoyeur et ce convoyeur est muni d'au moins une colonne d'équilibrage remplie partiellement de matériau pulvérulent, la hauteur de remplissage équilibrant la pression du gaz. Cette colonne d'équilibrage permet de créer des conditions de fluidisation potentielle du matériau pulvérulent. Ce dernier, peu remué en raison du très faible débit du gaz, se présente dans l'aérocanalisation sous la forme d'un lit hyperdense.

Pour bien comprendre la fluidisation potentielle, il est utile de rappeler ce qu'est la fluidisation classique, habituellement pratiquée pour le convoyage de matériaux pulvérulents, et décrite par exemple dans le brevet US 4 016 053. Le dispositif employé en fluidisation comporte également une aérocanalisation, telle que celle décrite précédemment. Le gaz de fluidisation est introduit sous une pression donnée $p_f$ dans le canal inférieur, traverse ladite paroi poreuse, puis passe entre les particules au repos du matériau pulvérulent formant la couche à fluidiser. Contrairement au dispositif à fluidisation potentielle décrit dans EP 0 179 055, l'épaisseur de cette couche au repos est très inférieure à la hauteur du canal supérieur dudit convoyeur, c'est-à-dire qu'en l'absence de toute injection de gaz de fluidisation, le matériau pulvérulent ne remplit que très partiellement le canal supérieur du convoyeur horizontal.

En imposant un débit de gaz important, lesdites particules sont mises en mouvement et soulevées, chacune d'entre elles perdant les points de contact permanent avec ses voisines. Par ce moyen, l'espace interstitiel existant entre les particules augmente, les frottements internes entre particules sont réduits et ces particules sont mises dans un état de suspension dynamique. De ce fait, il en résulte une augmentation du volume initial du matériau pulvérulent et, corrélativement, une diminution de la densité apparente, puisqu'il se forme une suspension d'une phase solide dans une phase gazeuse.

La densité apparente du matériau est donc plus faible, comparée à celle que l'on rencontre en fluidisation potentielle, telle que celle décrite dans EP 0 179 055, où l'on parle de phase hyperdense. Le terme de "phase dense" est généralement réservé au transport pneumatique à haute pression. La phase hyperdense est caractéristique de la fluidisation potentielle. Pour fixer les idées, on considère par exemple dans le cas de l'alumine Al2O3 que le rapport solide/gaz est de l'ordre de 10 à 150 kg Al2O3 / kg air dans le transport pneumatique en phase dense et de 750 à 950 kg Al2O3/ kg air pour le transport par fluidisation potentielle en phase hyperdense. La phase hyperdense permet donc de transporter le solide pulvérulent à des concentrations solide/gaz très importantes, nettement plus élevées que la phase dense en transport pneumatique.

Dans le cas de la fluidisation potentielle, même lorsqu'il n'y a pas injection de gaz, le matériau pulvérulent remplit presque complètement le dispositif de convoyage, en particulier le canal supérieur. Lorsque le gaz est introduit dans le canal inférieur, la colonne d'équilibrage se remplit partiellement du matériau pulvérulent occupant le canal supérieur, selon une hauteur manométrique qui équilibre la pression $p_f$ et interdit l'accroissement des interstices entre les particules. De ce fait, la présence de la colonne d'équilibrage interdit la fluidisation du matériau pulvérulent présent dans le convoyeur horizontal et oblige ledit matériau à se présenter sous l'aspect d'un lit hyperdense à fluidisation potentielle. En outre, comme la distance interstitielle entre les particules n'augmente pas, la perméabilité du milieu au gaz introduit sous la pression $p_f$ est très faible et limite l'écoulement gazeux à un très petit débit. Nous appellerons par la suite "dégazage" cet écoulement gazeux à faible débit qui traverse la colonne d'équilibrage.

Ainsi, avec une pression de fluidisation $p_f$ de 8 kPa (80 millibars), la vitesse du gaz en circulation correspondant à ladite pression $p_f$ et provoquant la fluidisation d'alumine pulvérulente est de l'ordre de $33 \cdot 10^{-3}$ m s$^{-1}$ dans le dispositif décrit dans US 4 016053, alors que, dans le dispositif à fluidisation potentielle de EP-B-0 1 7? 055, la vitesse du gaz en circulation est seulement de l'ordre de $4 \cdot 10^{-3}$ m s$^{-1}$. Cette vitesse est trop faible pour pouvoir provoquer la fluidisation de l'alumine dans l'ensemble du convoyeur.

Il n'y a pas fluidisation mais on peut bien parler de fluidisation potentielle: s'il n'y a pas circulation permanente du matériau dans l'aérocanalisation, il y a écoulement par éboulements successifs dès que le besoin en matériau pulvérulent se fait sentir, par exemple lorsque le niveau de la zone à alimenter descend en-dessous d'une valeur critique. En effet, lorsque la consommation continue du matériau stocké dans la zone à alimenter est telle que le niveau du matériau baisse et arrive en-dessous de l'orifice de la canalisation d'alimentation, une certaine quantité du matériau pulvérulent s'échappe de la canalisation, en créant un "vide" qui se remplit par un éboulement du matériau, éboulement qui en entraîne un autre en amont et se reproduit ainsi de proche en proche dans l'aérocanalisation en remontant vers le silo de stockage.

Le dispositif à fluidisation potentielle de convoyage en lit hyperdense, tel qu'il est décrit dans EP-8-0 179 055, est exploité à grande échelle, notamment pour alimenter les cuves de 300 000 ampères des installations récentes réalisant l'électrolyse ignée de l'aluminium. Les avantages de ce dispositif sont bien connus:

- une alimentation continue des cuves permettant de maintenir les trémies toujours pleines,
- un faible entretien du système,
- des pressions d'air nécessaires à la fluidisation relativement faible (0,1 bar comparé à 6 bar pour le transport pneumatique en phase dense),
- un déplacement à faible vitesse de l'alumine limitant l'usure du matériel et l'attrition ou l'agglomération du produit.

## PROBLEME POSE

S'il présente tous les avantages précités, le dispositif décrit dans EP-B-0 179 055 peut présenter quelques inconvénients si l'on ne prend pas quelques précautions particulières:

- une consommation de gaz de fluidisation, et donc d'énergie, non optimisée,
- des envolements, c'est-à-dire des recyclages d'alumine, importants par les colonnes d'équilibrage,
- un risque de ségrégation granulométrique par envolement préférentiel des particules les plus fines.

D'autre part, dans un atelier d'électrolyse, le nombre de zones à alimenter à partir d'une seule zone de stockage est important (plusieurs dizaines) et la distance entre la zone de stockage et la zone à alimenter peut être importante (plusieurs centaines de mètres). Pour répondre à ces contraintes, la demanderesse a proposé le dispositif illustré dans EP-B-0 179 055, constitué d'une série de convoyeurs en cascade: un convoyeur primaire reliant la zone de stockage à une série de convoyeur secondaires, chacun affecté à une cuve et muni de piquages latéraux alimentant des trémies intégrées à la superstructure de la cuve. Bien que ces aérocanalisations, notamment le convoyeur primaire, soient munies de nombreuses colonnes d'équilibrage, on peut constater dans certaines conditions de fonctionnement:

- un fonctionnement instable avec risque de blocage complet de l'aérocanalisation lorsque le dégazage ne se fait pas ou est incomplet dans une des colonnes d'équilibrage
- un contrôle aléatoire du niveau de l'alumine dans l'aérocanalisation et dans la colonne d'équilibrage, pouvant entraîner une rupture d'alimentation dans les cas extrêmes.

## OBJET DE L'INVENTION

Le procédé selon l'invention est un procédé de convoyage de matériaux pulvérulents en lit hyperdense par fluidisation potentielle, utilisant un dispositif comprenant au moins une aérocanalisation, comportant un canal inférieur destiné à la circulation d'un gaz de fluidisation, un canal supérieur destiné à la circulation du matériau pulvérulent, les deux canaux étant séparés par une paroi poreuse, au moins une tubulure d'alimentation en gaz de fluidisation et une colonne d'équilibrage dont la hauteur de remplissage équilibre la pression de fluidisation potentielle, caractérisé en ce qu'on crée dans le canal supérieur de l'aérocanalisation une bulle de gaz sous pression. De préférence, on cherchera à créer une bulle en tout point de l'aérocanalisation, à l'exception de la partie supérieure du canal supérieur située au voisinage des colonnes d'équilibrage. De préférence également, on cherchera à ce que ladite bulle ainsi créée soit localisée durablement dans la partie supérieure du canal supérieur.

Un autre objet de l'invention est un dispositif permettant de créer, de contrôler et de réguler le volume et la pression de la bulle de gaz de fluidisation maintenue dans la partie supérieure du canal supérieur de l'aérocanalisation.

Même si le nombre de zones à alimenter est important, le procédé selon l'invention permet de maintenir en état de fluidisation potentielle toute partie de l'aérocanalisation située entre la zone de stockage et une zone à alimenter. Ce procédé est caractérisé en ce qu'on asservit la pression de la bulle créée selon l'invention dans la partie supérieure du canal supérieur, de telle sorte que la hauteur du produit pulvérulent dans la colonne d'équilibrage qui se trouve au voisinage de la bulle soit maintenue à une valeur de consigne prédéfinie.

Sans l'amélioration apportée par le procédé selon l'invention, il arrive que la circulation du gaz de fluidisation à travers le produit pulvérulent devient aléatoire, le risque étant d'autant plus grand que la distance entre la zone de stockage et les zones à alimenter dépasse plusieurs centaines de mètres et que le nombre de zones à alimenter à partir d'une seule zone de stockage est important. Même si les aérocanalisations sont munies de plusieurs colonnes d'équilibrage, il arrive que certaines zones ne se trouvent pas en situation de fluidisation potentielle, ce qui peut avoir des conséquences catastrophiques notamment lorsqu'il s'agit d'alimenter en continu une cellule de cuve d'électrolyse ignée.

La demanderesse a constaté avec surprise que lorsque la partie supérieure de l'aérocanalisation n'est pas remplie de matériau pulvérulent, le gaz de fluidisation peut circuler plus facilement, ce qui améliore les conditions de fluidisation potentielle qui doivent être remplies en tout endroit de l'aérocanalisation. Selon le procédé de l'invention, on crée une bulle de gaz de fluidisation dans la partie supérieure de l'aérocanalisation, du moins en dehors du voisinage des colonnes d'équilibrage, car le matériau pulvérulent doit pouvoir remonter librement dans ladite colonne. Il s'agit également de créer une bulle "stable", afin d'éviter des écoulements ou éboulements intempestifs du matériau pulvérulent.

Il y a ainsi deux phases distinctes dans le canal supérieur du convoyeur:

- une phase fluidisée ou en fluidisation potentielle qui est un mélange de solide pulvérulent et de gaz de fluidisation, située à la partie inférieure de l'aérocanalisation.
- une phase distincte constituée essentiellement du gaz de fluidisation circulant à la partie supérieure du convoyeur. C'est cette phase qui constitue la "bulle".

Comme dans la fluidisation classique, le canal supérieur de l'aérocanalisation n'est pas complètement rempli par le matériau pulvérulent à transporter, mais la grande différence existant entre le dispositif utilisé pour mettre en oeuvre le procédé selon l'invention et une aérocanalisation de fluidisation classique réside dans le fait que la bulle de gaz surmontant le niveau supérieur du matériau pulvérulent subsiste après la mise en pression. Cette pression est directement reliée à la hauteur de matériau pulvérulent situé dans la colonne d'équilibrage voisine.

Pour créer ces bulles, on introduit par exemple des barrages tels que des fers plats ou d'autres formes géométriques telle qu'une pénétration circulaire ou polygonale des colonnes d'équilibrage. On peut également combiner l'implantation de fers plats et les pénétrations des colonnes d'équilibrage.

Le volume occupé par la bulle de gaz dépend de la largeur de l'aérocanalisation, de la hauteur et de la disposition des barrages. Cette hauteur est en général comprise entre le centième et la moitié de la hauteur de la partie utile de l'aérocanalisation transportant le solide pulvérulent. En effet, si cette hauteur est inférieure au centième de la hauteur de la partie utile de l'aérocanalisation, alors le gaz a de la difficulté à circuler librement et la bulle n'est pas efficace. Si cette hauteur est supérieure à la moitié de la hauteur de la partie utile de l'aérocanalisation, la circulation du produit pulvérulent est limitée et on augmente inutilement la hauteur de l'aérocanalisation pour un même débit de produit transporté. Idéalement, la hauteur de la bulle est par exemple de 50 mm pour une aérocanalisation traditionnelle.

La disposition des barrages dépend de la longueur totale de l'aérocanalisation et du nombre de colonnes d'équilibrage. Il faut en général au moins un barrage associé à chaque colonne d'équilibrage. Le système peut cependant fonctionner avec un nombre de barrages inférieur au nombre de colonnes d'équilibrage.

Chaque bulle est donc de préférence associée à au moins une colonne d'équilibrage.

La bulle est alors délimitée dans l'espace par la paroi supérieure du canal supérieur de l'aérocanalisation, les fers plats formant barrage et/ou la pénétration d'au moins une colonne d'équilibrage. L'autre frontière est le niveau supérieur du matériau pulvérulent. En dehors de cette dernière frontière, l'ensemble des parois est fixe, ce qui permet de localiser durablement la bulle, autrement dit de stabiliser et de figer son positionnement dans des limites parfaitement définies. On évite ainsi tout risque de déplacement brutal de la bulle, susceptible d'entraîner soit un écoulement ou un éboulement intempestif du matériau pulvérulent dans l'aérocanalisation, soit un blocage local dû au remplissage complet de la section du canal supérieur de l'aérocanalisation par le matériau pulvérulent.

La bulle est soumise à une pression directement liée à la hauteur de matériau pulvérulent remplissant la colonne d'équilibrage associée. Dans le cas où le nombre de barrages est inférieur au nombre de colonnes d'équilibrage, la bulle est associée à plusieurs colonnes, remplies d'une hauteur de matériau pulvérulent sensiblement égale.

En contrôlant localement le volume et la pression des bulles, on peut réguler la pression de fluidisation en tout endroit de l'aérocanalisation.

Lorsque la bulle est créée, il est possible de réguler la hauteur d'alumine dans la colonne d'équilibrage, la relation entre la pression de bulle et la hauteur d'alumine étant donnée par la formule

$$p_b = h * d$$

avec h = hauteur d'alumine dans la colonne d'équilibrage

d = densité apparente moyenne de l'alumine.

La pression de fluidisation $p_f$ est la pression régnant dans le canal inférieur de l'aérocanalisation et permettant une fluidisation potentielle du matériau pulvérulent dans le canal supérieur. La pression de bulle est reliée à la pression de fluidisation par la formule simplifiée suivante :

$$p_f = \Delta P_p + H_l * d + p_b$$

avec $\Delta P_p$ = perte de charge dans la paroi poreuse

$h_l$ = hauteur d'alumine dans l'aérocanalisation $\Delta P_p$ reste pratiquement constant, car il n'est fonction que de l'épaisseur de la paroi poreuse et de la vitesse du gaz. Il suffit donc de réguler la pression de fluidisation par un asservissement s'appuyant sur la mesure de la pression de bulle pour maintenir la hauteur d'alumine dans la colonne d'équilibrage à un niveau contrôlé, à une valeur de consigne prédéfinie.

Cette régulation est pratiquement réalisée par l'utilisation d'un transmetteur de pression et d'un manomètre mesurant la pression de bulle, auquel est asservie une vanne de régulation automatique de la pression de fluidisation.

Ainsi, le contrôle de la pression de bulle permet de régler la pression de fluidisation à une valeur optimale pour maintenir le système en état de fluidisation potentielle. On évite ainsi tout excès de gaz dans le système et, par conséquent, il devient possible de minimiser la consommation d'énergie nécessaire à la fluidisation.

Dans la pratique, on cherche à maintenir une pression de bulle légèrement positive de manière à minimiser la quantité de gaz introduite tout en gardant une hauteur suffisante d'alumine dans la colonne d'équilibrage. Typiquement, on gardera une pression de bulle constante entre 100 et 50 000 Pa (1 et 500 mbar) et de préférence entre 500 et 5000 Pa (5 et 50 mbar).

La pression de bulle peut être mesurée en tout point de l'aérocanalisation mais c'est à l'extrémité de l'aérocanalisation qu'il est préférable de faire cette mesure car on peut ainsi s'assurer que l'aérocanalisation est pleine du matériau pulvérulent à transporter. Par la simple indication que la pression de bulle est positive en cet endroit, on s'assure que le système fonctionne correctement et que toutes les zones à alimenter sont bien alimentées.

Lorsque la pression de bulle est régulée comme indiqué ci-dessus, on constate :

- un niveau constant de l'alumine dans les colonnes d'équilibrage,
- un envolement faible, voire nul, des particules solides, en raison du faible débit de gaz nécessaire à la fluidisation régulée,
- une absence de ségrégation granulométrique le long de l'aérocanalisation,
- un écoulement régulier de la poudre. L'aérocanalisation est maintenue pleine de produit à tout instant, évitant ainsi tout risque de rupture d'approvisionnement.
- une consommation minimale d'énergie pour l'ensemble des machines de production de gaz de fluidisation.

**MODE DE REALISATION DE L'INVENTION - EXEMPLE**

Le procédé selon l'invention sera mieux compris par la description détaillée d'un dispositif de transport par aérocanalisation horizontale à pression de bulle en système hyperdense qui est utilisé pour l'alimentation des cuves d'électrolyse modernes de l'aluminium. Ce dispositif est exposé ici à titre d'exemple non limitatif.

La figure 1 est une vue schématique en coupe verticale du dispositif selon l'invention, comportant ici une aérocanalisation horizontale, pouvant symboliser une portion de convoyeur primaire ou de convoyeur secondaire, reliant le dispositif de stockage à un moyen d'évacuation et comportant un fer plat formant barrage et séparant deux bulles associées chacune à une colonne d'équilibrage.

La figure 2 est un schéma de principe de la régulation de la pression de fluidisation, réalisée en utilisant un transmetteur de pression et un manomètre mesurant la pression de bulle, auquel est asservie une vanne de régulation automatique de la pression de fluidisation.

La figure 3 est un schéma illustrant l'exemple donné ci-après avec une disposition particulière des colonnes d'équilibrage et des barrages.

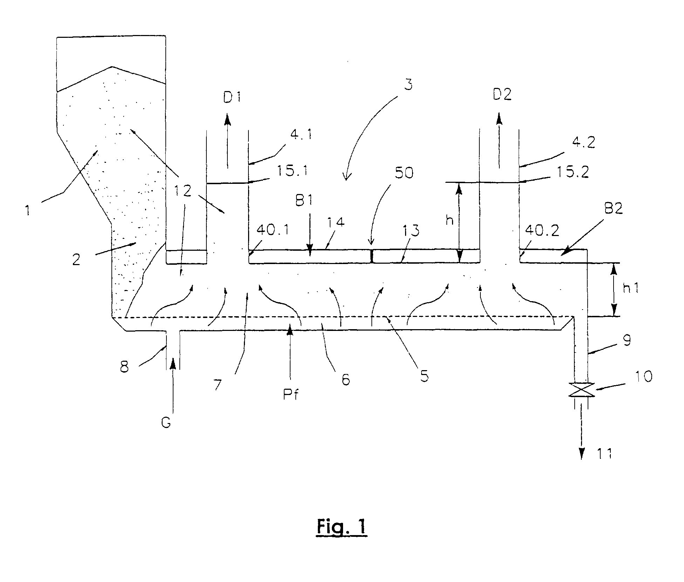

Le dispositif de la figure 1 se compose d'un réservoir de stockage aérien **1** du matériau à transporter, relié par une canalisation **2** à un convoyeur **3** du type aérocanalisation ou aéroglissière à fluidisation, de colonnes d'équilibrage **41** et **42**, d'un moyen d'évacuation **9** du convoyeur, qui, à l'aide d'un sytème de dosage contrôlé **10**, entraîne le matériau pulvérulent vers la zone à alimenter **11**.

Le réservoir de stockage aérien **1** contient le matériau pulvérulent **12** en vrac, soumis à la pression atmosphérique. Ce réservoir est en charge sur l'une des extrémités du convoyeur horizontal (ou incliné) **3** par l'intermédiaire de la canalisation **2**. Le convoyeur **3**, longiligne, se compose d'une paroi poreuse **5** séparant le canal inférieur **6** et le canal supérieur **7** à circulation du matériau pulvérulent.

Un gaz de fluidisation **G** est introduit par une canalisation **8** dans le canal inférieur **6,** où il est soumis à la pression de fluidisation $p_f$. Ce gaz passe au travers de la paroi poreuse **5,** appelée également toile, puis au travers du matériau pulvérulent qui remplit le canal supérieur **7** du convoyeur. Le gaz est évacué à faible débit **(D1, D2)** en traversant le matériau pulvérulent qui remplit partiellement les colonnes d'équilibrage **4.1** et **4.2** jusqu'aux niveaux **15.1** et **15.2,** selon une hauteur manométrique **h** qui équilibre la pression de gaz $p_f$.

Le barrage est réalisé par un fer plat **50** séparant en deux la partie supérieure du canal supérieur **7,** formant ainsi deux bulles **B1** et **B2.** Le volume de ces bulles est parfaitement délimité dans l'espace par la paroi de la partie haute **14** du canal supérieur **7,** le fer plat **50**, les pénétrations **40.1** et **40.2** des colonnes d'équilibrage **4.1** et **4.2** et le niveau supérieur **13** du matériau pulvérulent **12**.

La figure 1 montre comment s'effectue la circulation du gaz **G** de fluidisation, qui passe à travers la toile **6** puis se dirige vers les colonnes d'équilibrage **4.1** et **4.2** de part et d'autre du barrage **50**. Rappelons que la figure 1 illustre deux colonnes d'équilibrage associées à un barrage, mais il est clair que pour des aérocanalisations plus longues le nombre de colonnes et de barrages sera plus important.

L'aérocanalisation est munie d'un moyen d'évacuation **9** qui transforme le mouvement horizontal du matériau pulvérulent en un mouvement vertical ou fortement incliné permettant d'alimenter soit un convoyeur secondaire, si l'aérocanalisation est un convoyeur primaire, soit une trémie intégrée à la superstructure d'une cuve d'électrolyse, si l'aérocanalisation est un convoyeur secondaire. Les trémies sont équipées à leur partie inférieure de systèmes de dosage contrôlé **10** permettant d'introduire les quantités d'alumine désirées dans la cuve.

Le présent exemple présente comme convoyeur primaire une aérocanalisation horizontale longue de 400 m. Elle est alimentée en alumine, à partir d'un silo de stockage situé en son milieu. Le nombre de cuves alimentées par l'aérocanalisation est de 72: il y a 72 convoyeurs secondaires qui alimentent les trémies intégrées à la superstructure de chacune des 72 cuves. Le convoyeur primaire est muni de 36 colonnes d'équilibrage et d'un nombre égal de barrages.

La pression de bulle mesurée en bout de l'aérocanalisation est de 1 kPa (10 mbar). Elle est maintenue constante par réglage de la pression de fluidisation.

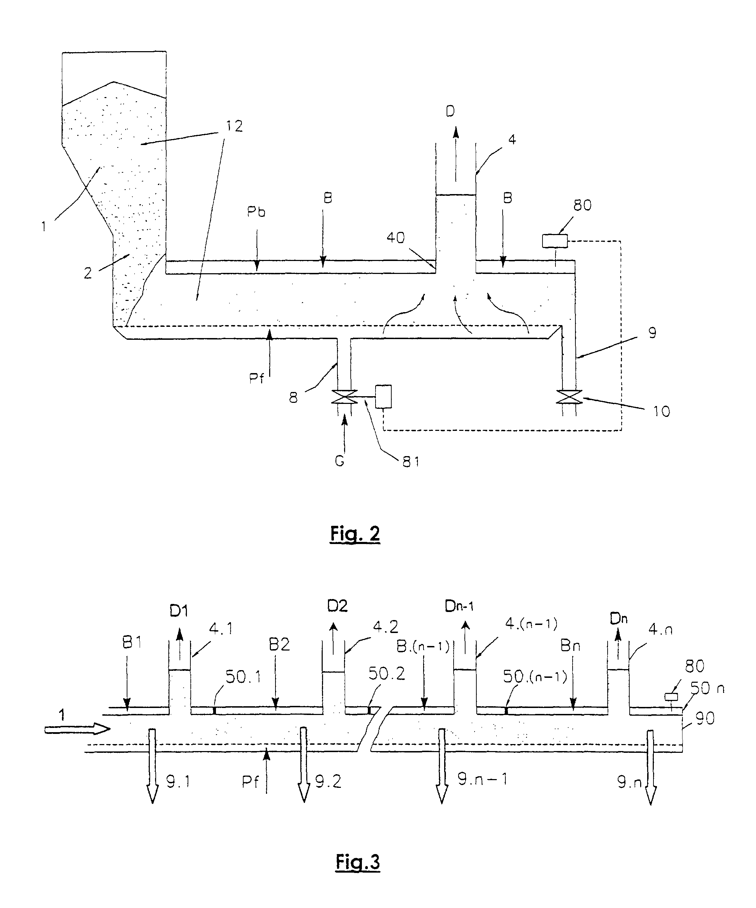

La figure 2 montre comment on peut réguler la pression de fluidisation $p_f$ en mesurant la pression de bulle $p_b$ dans la bulle **B** pour maintenir un niveau contrôlé, à une valeur de consigne **h** désirée, de l'alumine dans la colonne d'équilibrage **4**.

Cette régulation est obtenue en utilisant un transmetteur **80** de pression associé à un manomètre mesurant la pression de bulle $p_b$, auquel est asservie une vanne **81** de régulation automatique de la pression de fluidisation $p_f$ qui contrôle l'arrivée du gaz de fluidisation **G** par la canalisation **8**.

Ainsi, le contrôle de la pression de bulle $p_b$ permet de régler la pression de fluidisation $p_f$ à une valeur optimale permettant de maintenir le système en état de fluidisation potentielle.

La pression de bulle peut être mesurée en tout point de l'aérocanalisation mais c'est à l'extrémité de l'aérocanalisation qu'il est préférable de faire cette mesure car on peut ainsi s'assurer que l'aérocanalisation est pleine d'alumine. Par la simple indication que la pression de bulle est positive en cet endroit, on s'assure que le système fonctionne correctement et que toutes les cuves sont alimentées.

Le schéma de la figure 3 indique la disposition relative des colonnes d'équilibrage et des barrages nécessaires à créer la pression de bulle pour un fonctionnement préféré du système en phase hyperdense, dans le cas d'une installation comprenant 2n cuves d'électrolyse et n colonnes d'équilibrage. Dans l'exemple choisi, le nombre n est égal à 36.

Le fer plat **50.1** sépare les bulles **B1** et **B2.** Il est situé légèrement en aval de la colonne **4.1.** A la butte **B1** est associé le moyen de d'évacuation **9.1** symbolisant deux convoyeurs secondaires alimentant chacun une cuve. De même le fer plat **50.(n-1)** sépare les bulles $B_{n-1}$ et $B_n$. Il se situe légèrement en aval de la colonne d'équilibrage **4.(n-1).** La bulle $B_n$ est associée au moyen d'évacuation **9.n** symbolisant deux convoyeurs alimentant les cuves d'ordres respectifs 2n-1 et 2n. Le barrage **50.n** est en fait confondu avec la paroi d'extrémité **90** du convoyeur, située en aval de la dernière colonne d'équilibrage **4.n.** Le transmetteur de pression **80** est situé à proximité de l'extrémité **90** de l'aérocanalisation **3**: la régulation de la pression de fluidisation $p_f$ s'appuie sur une mesure effectuée sur la bulle $B_n$ située en bout d'aérocanalisation, c'est-à-dire susceptible d'être à la pression la plus faible.

**AVANTAGES DU PROCEDE SELON L'INVENTION**

- un niveau constant de l'alumine dans les colonnes d'équilibrage,
- un envolement faible, voire nul, des particules solides, en raison du faible débit de gaz nécessaire à la fluidisation régulée,
- une absence de ségrégation granulométrique le long de l'aérocanalisation,
- un écoulement, donc un approvisionnement régulier de la poudre. Cet avantage est particulièrement important pour les cuves d'électrolyse ignée de l'aluminium.
- une consommation minimale d'énergie pour l'ensemble des machines de production de gaz de fluidisation.

**Revendications**

1. Procédé de convoyage d'un matériau pulvérulent (12) en lit hyperdense par fluidisation potentielle, utilisant un dispositif comprenant au moins une aérocanalisation (3), comportant un canal inférieur (5) destiné à la circulation d'un gaz de fluidisation (G), un canal supérieur (7) destiné à la circulation du matériau pulvérulent (12), les deux canaux étant séparés par une paroi poreuse (6), au moins une canalisation (8) d'alimentation en gaz (G) et une colonne d'équilibrage (4; 4.1, 4.2; 4.n) dont la hauteur de remplissage (h) équilibre la pression de fluidisation potentielle ($p_f$), **caractérisé en ce qu'**en appliquant la pression de fluidisation dans ladite aérocanalisation, on crée dans le canal supérieur (7) de l'aérocanalisation (3) une bulle (B1, B2; B; Bn) de gaz sous pression.

2. Procédé de convoyage d'un matériau pulvérulent (12) en lit hyperdense par fluidisation potentielle selon la revendication 1, **caractérisé en ce que** ladite bulle (B1, B2; B; Bn) est localisée durablement dans la partie supérieure (14) du canal supérieur (7) de ladite aérocanalisation (3).

3. Procédé de convoyage d'un matériau pulvérulent (12) en lit hyperdense par fluidisation potentielle selon la revendication 1 ou 2, **caractérisé en ce que** ladite bulle (B1, B2; B; Bn) est créée et maintenue dans la partie supérieure (14) du canal supérieur (7) de ladite aérocanalisation (3) par la mise en place de parois formant barrage, la mise sous pression de ladite bulle résultant de la mise sous pression de fluidisation de ladite aérocanalisation.

4. Procédé de convoyage d'un matériau pulvérulent (12) en lit hyperdense par fluidisation potentielle selon l'une quelconque des revendications 1 à 3, **caractérisé en ce que** ladite bulle (B1, B2; B; Bn) de gaz sous pression est associée à au moins une colonne d'équilibrage (4; 4.1, 4.2: 4.n).

5. Procédé de convoyage d'un matériau pulvérulent (12) en lit hyperdense par fluidisation potentielle selon l'une quelconque des revendications 1 à 4, **caractérisé en ce qu'**on régule la pression de fluidisation potentielle par un asservissement sur la pression de bulle ($p_b$).

6. Procédé de convoyage d'un matériau pulvérulent (12) en lit hyperdense par fluidisation potentielle selon la revendication 5, **caractérisé en ce qu'**on mesure la pression de bulle ($p_b$) en extrémité de l'aérocanalisation.

7. Procédé de convoyage d'un matériau pulvérulent (12) en lit hyperdense par fluidisation potentielle selon la revendication 5, **caractérisé en ce que** la pression de bulle ($p_b$) est comprise entre 0.1 et 50 kPa (1 et 500 mbar), et de préférence entre 0.5 et 5 kPa (5 et 50 mbar).

8. Procédé de convoyage d'un matériau pulvérulent (12) en lit hyperdense par fluidisation potentielle selon l'une quelconque des revendications 5 à 7, **caractérisé en ce qu'**on utilise un transmetteur de pression (80) associé à un manomètre mesurant la pression de bulle ($p_b$) auquel est asservie une vanne (81) de régulation automatique de la pression de fluidisation ($p_f$) qui contrôle l'arrivée du gaz de fluidisation (G) par la canalisation (8).

9. Dispositif de convoyage d'un matériau pulvérulent (12) en lit hyperdense par fluidisation potentielle, comprenant au moins une aérocanalisation (3), comportant un canal inférieur (5) destiné à la circulation d'un gaz de fluidisation (G), un canal supérieur (7) destiné à la circulation du matériau pulvérulent (12), les deux canaux étant séparés par une paroi poreuse (6), ainsi qu'au moins une canalisation (8) d'alimentation en gaz (G) et une colonne d'équilibrage (4; 4.1,4.2; 4.n) dont la hauteur de remplissage (h) équilibre la pression de fluidisation potentielle ($p_f$), **caractérisé en ce que** la partie supérieure (14) du canal supérieur (7) de l'aérocanalisation (3) est munie d'au moins un barrage (50), par exemple sous la forme d'un fer plat.

**10.** Dispositif de convoyage d'un matériau pulvérulent (12) en lit hyperdense par fiuidisation potentielle selon la revendication 9, **caractérisé en ce que** le ou chaque barrage (50) contribue à la création et au maintien durable d'une bulle (B1, B2; B; Bn) de gaz sous pression dans la partie supérieure (14) du canal supérieur (7) de l'aérocanalisation (3), lorsque ladite aérocanalisation est mise sous pression de fluidisation potentielle.

**11.** Dispositif de convoyage d'un matériau pulvérulent (12) en lit hyperdense par fluidisation potentielle selon la revendication 9 ou 10, **caractérisé en ce que** le ou chaque barrage (50) occupe entre un centième et la moitié de la hauteur dudit canal supérieur (7).

**12.** Dispositif de convoyage d'un matériau pulvérulent (12) en lit hyperdense par fluidisation potentielle, comprenant au moins une aérocanalisation (3), comportant un canal inférieur (5) destiné à la circulation d'un gaz de fluidisation (G), un canal supérieur (7) destiné à la circulation du matériau pulvérulent (12), les deux canaux étant séparés par une paroi poreuse (6), ainsi qu'au moins une canalisation (8) d'alimentation en gaz (G) et une colonne d'équilibrage (4; 4.1,4.2; 4.n) dont la hauteur de remplissage (h) équilibre la pression de fluidisation potentielle ($p_f$), **caractérisé en ce que** ladite colonne d'équilibrage (4; 4.1,4.2; 4.n) est prolongée dans ladite aérocanalisation (3) par une pénétration (40.1, 40.2; 40).

**13.** Dispositif de convoyage d'un matériau pulvérulent (12) en lit hyperdense par fluidisation potentielle selon la revendication 12, **caractérisé en ce que** ladite pénétration (40.1, 40.2; 40) contribue à la création et au maintien durable d'une bulle (B1, B2; B; Bn) de gaz sous pression dans la partie supérieure (14) du canal supérieur (7) de l'aérocanalisation (3), lorsque ladite aérocanalisation est mise sous pression de fluidisation potentielle.

**14.** Dispositif de convoyage d'un matériau pulvérulent (12) en lit hyperdense par fluidisation potentielle selon la revendication 12 ou 13, **caractérisé en ce que** la dite pénétration (40.1, 40.2: 40) de ladite colonne d'équilibrage (4; 4.1,4.2; 4.n) a une hauteur comprise entre un centième et la moitié de la hauteur dudit canal supérieur (7).

**15.** Dispositif de convoyage d'un matériau pulvérulent (12) en lit hyperdense par fluidisation potentielle selon l'une quelconque des revendications 9 à 11 et l'une quelconque des revendications 12 à 14, **ca-**ractérisé en ce que** la hauteur du ou de chaque barrage (50) et celle des pénétrations (40.1, 40.2) des colonnes d'équilibrage (4.1,4.2) sont sensiblement égales et déterminent la hauteur de la ou de chaque bulle (B1, B2) de gaz sous pression.

**16.** Dispositif de convoyage d'un matériau pulvérulent (12) en lit hyperdense par fluidisation potentielle selon l'une quelconque des revendications 9 à 15, **caractérisé en ce que** le nombre de barrages (50; 50.1; 50.2; 50.n) est inférieur ou égal au nombre de colonnes d'équilibrage (4; 4.1,4.2; 4.n).

**Claims**

**1.** Process for conveyance of a powder material (12) in a potential fluidization hyperdense bed using a device comprising at least one air pipe (3) comprising a lower duct (5) for circulation of a fluidization gas (G), an upper duct (7) for circulation of the powder material (12), the two ducts being separated by a porous wall (6), at least one pipe (8) supplying gas (G) and a balancing column (4; 4.1; 4.2; 4.n), in which the filling height (h) balances the potential fluidization pressure ($p_f$), **characterized in that** a bubble (B1; B2; B; Bn) of pressurized gas is created in the upper duct (7) in the air pipe (3) when the fluidization pressure is applied in the said air pipe.

**2.** Process for conveyance of a powder material (12) in a potential fluidization hyperdense bed according to claim 1, **characterized in that** the said bubble (B1; B2; B; Bn) remains reliably in the upper part (14) of the upper duct (7) of the said air pipe (3).

**3.** Process for conveyance of a powder material (12) in a potential fluidization hyperdense bed according to claim 1 or 2, **characterized in that** the said bubble (B1; B2; B; Bn) is created and maintained in the upper part (14) of the upper duct (7) of the said air pipe (3), by placing walls forming a barrier, the pressurization of the said bubble being the result of the fluidization pressure of the said air pipe.

**4.** Process for conveyance of a powder material (12) in a potential fluidization hyperdense bed according to one of claims 1 to 3, **characterized in that** the said bubble (B1; B2; B; Bn) of pressurized gas is associated with at least one balancing column (4; 4.1; 4.2; 4.n).

**5.** Process for conveyance of a powder material (12) in a potential fluidization hyperdense bed according to one of claims 1 to 4, **characterized in that** the potential fluidization pressure is regulated by servocontrol to the bubble pressure ($p_b$).

**6.** Process for conveyance of a powder material (12) in a potential fluidization hyperdense bed according to claim 5, **characterized in that** the bubble pressure ($p_b$) at the end of the air pipe is measured.

**7.** Process for conveyance of a powder material (12) in a potential fluidization hyperdense bed according to claim 5, **characterized in that** the bubble pressure ($P_b$) is between 1 and 500 mbars, and preferably between 5 and 50 mbars.

**8.** Process for conveyance of a powder material (12) in a potential fluidization hyperdense bed according to one of claims 5 to 7, **characterized in that** a pressure transmitter (80) is used associated with a manometer measuring the bubble pressure ($P_b$) to which an automatic fluidization pressure ($p_f$) regulation valve (81) is servocontrolled, to control the inlet of fluidization gas (G) through pipe (8).

**9.** Conveying device for a powder material (12) in a potential fluidization hyperdense bed, comprising at least one air pipe (3) comprising a lower duct (5) for circulation of a fluidization gas (8), an upper duct (7) for circulation of powder material (12), the two ducts being separated by a porous wall (6), and at least one pipe (8) supplying gas (G) and a balancing column (4; 4.1; 4.2; 4.n), the filling height (h) of the balancing column balances the potential fluidization pressure ($p_f$), **characterized in that** the upper part (14) of the upper duct (7) of the air pipe (3) is provided with at least one barrier (50), for example in the form of a steel flat.

**10.** Conveying device for a powder material (12) in a potential fluidization hyperdense bed according to claim 9, **characterized in that** each barrier (50) contributes to creating or reliably sustaining a pressurized gas bubble (B1; B2; B; Bn) in the upper part (14) of the upper duct (7) in the air pipe (3), when the said air pipe is pressurized at the potential fluidization pressure.

**11.** Conveying device for a powder material (12) in a potential fluidization hyperdense bed according to claim 9 or 10, **characterized in that** each barrier (50) occupies between one hundredth and one half of the height of the said upper duct (7).

**12.** Conveying device for a powder material (12) in a potential fluidization hyperdense bed, comprising at least one air pipe (3), comprising a lower duct (5) for circulation of a fluidization gas (G), an upper duct (7) for circulation of the powder material (12), the two ducts being separated by a porous wall (6), and at least one pipe (8) supplying gas (G) and a balancing column (4; 4.1; 4.2; 4.n), the filling height (8) of which balances the potential fluidization pressure ($p_f$), **characterized in that** the said balancing column (4; 4.1; 4.2; 4.n) is prolonged in the said air pipe (3) by penetration (40.1; 40.2; 40).

**13.** Conveying device for a powder material (12) in a potential fluidization hyperdense bed according to claim 12, **characterized in that** the said penetration (40.1; 40.2; 40) contributes to creating and reliably maintaining a bubble (B1; B2; B; Bn) of pressurized gas in the upper part (14) of the upper duct (7) of the air pipe (3) when the said air pipe is pressurized at the potential fluidization pressure.

**14.** Conveying device for a powder material (12) in a potential fluidization hyperdense bed according to claim 12 or 13, **characterized in that** the height of the said penetration (40.1; 40.2; 40) of the said balancing column (4; 4.1; 4.2; 4.n) is between one hundredth and one half of the height of the said upper duct (7).

**15.** Conveying device for a powder material (12) in a potential fluidization hyperdense bed according to any one of claims 9 to 11 and any one of claims 12 to 14, **characterized in that** the height of each barrier (50) and the height of the penetrations (40.1, 40.2) of the balancing columns (4.1, 4.2) are approximately equal and control the height of each bubble or bubbles (B1, B2) of pressurized gas.

**16.** Conveying device for a powder material (12) in a potential fluidization hyperdense bed according to any one of claims 9 to 15, **characterized in that** the number of barriers (50; 50.1; 50.2; 50.n) is less than the number of balancing columns (4; 4.1; 4.2; 4.n).

**Patentansprüche**

**1.** Verfahren zum Fördern eines pulverförmigen Materials (12) in hochdichtem Fliessbett durch potentielles Fluidisieren unter Verwendung einer Vorrichtung mit mindestens einer Luftleitung (3), welche einen unteren Kanal (5) für den Umlauf eines Fluidisiergases (G), einen oberen Kanal (7) für den Umlauf des pulverförmigen Materials (12), wobei die beiden Kanäle durch eine poröse Wandung (6) voneinander getrennt sind, mindestens eine Leitung (8) zur Versorgung mit Gas (G) und eine Ausgleichskolonne (4; 4.1, 4.2; 4.n) aufweist, deren Füllhöhe (h) den potentiellen Fluidisierdruck ($p_f$) ausgleicht, **dadurch gekennzeichnet, dass** durch Einleitung des Fluidisierdruckes in die Luftleitung im oberen Kanal (7) der Luftleitung (3) eine Blase (B1, B2; B; Bn) aus druckbeaufschlagtem Gas erzeugt wird.

**2.** Verfahren zum Fördern eines pulverförmigen Materials (12) in hochdichtem Fliessbett durch potentielles Fluidisieren nach Anspruch 1, **dadurch gekennzeichnet, dass** die Blase (B1, B2; B; Bn) dauerhaft im oberen Bereich (14) des oberen Kanals (7) der Luftleitung (3) lokalisiert ist.

3. Verfahren zum Fördern eines pulverförmigen Materials (12) in hochdichtem Fliessbett durch potentielles Fluidisieren nach Anspruch 1 oder 2, **dadurch gekennzeichnet, dass** die Blase (B1, B2; B; Bn) im oberen Bereich (14) des oberen Kanals (7) der Luftleitung (3) durch Anordnung von barrierebildenden Wandungen erzeugt wird und erhalten bleibt, wobei die Druckbeaufschlagung der Blase aus der Fluidisierdruckbeaufschlagung der Luftleitung resultiert.

4. Verfahren zum Fördern eines pulverförmigen Materials (12) in hochdichtem Fliessbett durch potentielles Fluidisieren nach einem der Ansprüche 1 bis 3, **dadurch gekennzeichnet, dass** die Blase (B1, B2; B; Bn) aus druckbeaufschlagtem Gas mit mindestens einer Ausgleichskolonne (4; 4.1, 4.2; 4.n) verbunden ist.

5. Verfahren zum Fördern eines pulverförmigen Materials (12) in hochdichtem Fliessbett durch potentielles Fluidisieren nach einem der Ansprüche 1 bis 4, **dadurch gekennzeichnet, dass** der potentielle Fluidisierdruck in Abhängigkeit vom Blasendruck ($P_b$) reguliert wird.

6. Verfahren zum Fördern eines pulverförmigen Materials (12) in hochdichtem Fliessbett durch potentielles Fluidisieren nach Anspruch 5, **dadurch gekennzeichnet, dass** der Blasendruck ($P_b$) am Ende der Luftleitung gemessen wird.

7. Verfahren zum Fördern eines pulverförmigen Materials (12) in hochdichtem Fliessbett durch potentielles Fluidisieren nach Anspruch 5, **dadurch gekennzeichnet, dass** der Blasendruck ($p_b$) im Bereich von 0,1 bis 50 kPa (1 bis 500 mbar) und vorzugsweise 0,5 bis 5 kPa (5 bis 50 mbar) liegt.

8. Verfahren zum Fördern eines pulverförmigen Materials (12) in hochdichtem Fliessbett durch potentielles Fluidisieren nach einem der Ansprüche 5 bis 7, **dadurch gekennzeichnet, dass** ein mit einem den Blasendruck ($p_b$) messenden Druckmesser verbundener Druckgeber (80) verwendet wird, dem ein Ventil (81) zur automatischen Regelung des Fluidisierdruckes ($p_f$) zugeordnet ist, das die Zufuhr des Fluidisiergases (G) durch die Leitung (8) steuert.

9. Vorrichtung zum Fördern eines pulverförmigen Materials (12) in hochdichtem Fliessbett durch potentielles Fluidisieren, umfassend mindestens eine Luftleitung (3) mit einem unteren Kanal (5) für den Umlauf eines Fluidisiergases (G), einem oberen Kanal (7) für den Umlauf des pulverförmigen Materials (12), wobei die beiden Kanäle durch eine poröse Wandung (6) voneinander getrennt sind, sowie mindestens einer Leitung (8) zur Versorgung mit Gas (G) und einer Ausgleichskolonne (4; 4.1, 4.2; 4.n), deren Füllhöhe (h) den potentiellen Fluidisierdruck ($p_f$) ausgleicht, **dadurch gekennzeichnet, dass** der obere Bereich (14) des oberen Kanals (7) der Luftleitung (3) mit mindestens einer Sperre (50), zum Beispiel in Form eines Flacheisens, versehen ist.

10. Vorrichtung zum Fördern eines pulverförmigen Materials (12) in hochdichtem Fliessbett durch potentielles Fluidisieren nach Anspruch 9, **dadurch gekennzeichnet, dass** die bzw. jede Sperre (50) zur Erzeugung und dauerhaften Erhaltung einer Blase (B1, B2; B; Bn) aus druckbeaufschlagtem Gas im oberen Bereich (14) des oberen Kanals (7) der Luftleitung (3) beiträgt, wenn die Luftleitung mit potentiellem Fluidisierdruck beaufschlagt wird.

11. Vorrichtung zum Fördern eines pulverförmigen Materials (12) in hochdichtem Fliessbett durch potentielles Fluidisieren nach Anspruch 9 oder 10, **dadurch gekennzeichnet, dass** die bzw. jede Sperre (50) ein Hunderstel bis zur Hälfte der Höhe des oberen Kanals (7) belegt.

12. Vorrichtung zum Fördern eines pulverförmigen Materials (12) in hochdichtem Fliessbett durch potentielles Fluidisieren, umfassend mindestens eine Luftleitung (3) mit einem unteren Kanal (5) für den Umlauf eines Fluidisiergases (G), einem oberen Kanal (7) für den Umlauf des pulverförmigen Materials (12), wobei die beiden Kanäle durch eine poröse Wandung (6) voneinander getrennt sind, sowie mindestens einer Leitung (8) zur Versorgung mit Gas (G) und einer Ausgleichskolonne (4; 4.1, 4.2; 4.n), deren Füllhöhe (h) den potentiellen Fluidisierdruck ($p_f$) ausgleicht, **dadurch gekennzeichnet, dass** die Ausgleichskolonne (4; 4.1, 4.2; 4.n) in der Luftleitung (3) durch eine Durchdringung (40.1, 40.2; 40) verlängert ist.

13. Vorrichtung zum Fördern eines pulverförmigen Materials (12) in hochdichtem Fliessbett durch potentielles Fluidisieren nach Anspruch 12, **dadurch gekennzeichnet, dass** die Durchdringung (40.1, 40.2; 40) zur Erzeugung und dauerhaften Erhaltung einer Blase (B1, B2; B; Bn) aus druckbeaufschlagtem Gas im oberen Bereich (14) des oberen Kanals (7) der Luftleitung (3) beiträgt, wenn die Luftleitung mit potentiellem Fluidisierdruck beaufschlagt wird.

14. Vorrichtung zum Fördern eines pulverförmigen Materials (12) in hochdichtem Fliessbett durch potentielles Fluidisieren nach Anspruch 12 oder 13, **dadurch gekennzeichnet, dass** die Durchdringung (40.1, 40.2; 40) der Ausgleichskolonne (4; 4.1, 4.2; 4.n) eine Höhe hat, die zwischen einem Hunderstel und der Hälfte der Höhe des oberen Kanals (7) liegt.

15. Vorrichtung zum Fördern eines pulverförmigen Materials (12) in hochdichtem Fliessbett durch potentielles Fluidisieren nach einem der Ansprüche 9 bis 11 und einem der Ansprüche 12 bis 14, **dadurch gekennzeichnet, dass** die Höhe der bzw. jeder Sperre (50) und die der Durchdringungen (40.1, 40.2) der Ausgleichskolonnen (4.1, 4.2) im wesentlichen gleich sind und die Höhe der bzw. jeder Blase (B1, B2) aus druckbeaufschlagtem Gas bestimmen.

16. Vorrichtung zum Fördern eines pulverförmigen Materials (12) in hochdichtem Fliessbett durch potentielles Fluidisieren nach einem der Ansprüche 9 bis 15, **dadurch gekennzeichnet, dass** die Zahl der Sperren (50; 50.1; 50.2; 50.n) kleiner oder gleich der Zahl der Ausgleichskolonnen (4 ; 4.1, 4.2 ; 4.n) ist.

**Fig. 1**

**Fig. 2**

**Fig.3**